# EUROPÄISCHE PATENTSCHRIFT

(11) **EP 0 445 418 B1**
(45) Veröffentlichungstag und Bekanntmachung des Hinweises auf die Patenterteilung: **30.11.1994**
(21) Anmeldenummer: 90125013.4
(22) Anmeldetag: 20.12.1990
(51) Int. Cl.: G01M 1/08, G01M 1/22

(54) **Vorrichtung zum Eindrehen eines Wuchtkörpers in eine Bearbeitungsposition**
Device for positioning an object to be balanced in a position for correcting its imbalance
Dispositif de positionnement d'un objet à équilibrer dans la position de correction du balourd

(30) Priorität: 05.03.1990 DE 4006867
(43) Veröffentlichungstag der Anmeldung: 11.09.1991
(73) Patentinhaber: Krauss-Maffei Aktiengesellschaft, 80997 München (DE)
(72) Erfinder: Betz, Jürgen, W-6103 Griesheim (DE); Kissinger, Jürgen, W-6103 Griesheim (DE); Heydt, Peter, W-6103 Griesheim (DE)
(74) Vertreter: Wolgast, Rudolf, Dipl.-Chem. Dr.

(56) Entgegenhaltungen:
- EP-A- 0 045 505
- EP-A- 0 074 416
- EP-A- 0 085 873
- GB-A- 2 100 867
- US-A- 3 751 987
- Schenck Prospekt ABC 1114 "Auswuchten mit Schenck", Darmstadt (DE), November 1989, Seite 18
- Aus dem Buch "Auswuchttechnik Band 1" von K.Federn, Berlin (DE), 1977, Seiten 216-221.

## Beschreibung

### Technisches Gebiet

Die Erfindung betrifft eine Vorrichtung nach dem ersten Teil des Anspruchs 1.

Der Vorgang des Auswuchtens eines Rotors setzt sich aus zwei Schritten zusammen. Der erste Schritt ist die meßtechnische Ermittlung der Unwucht nach deren Winkellage und Größe in einem Meßlauf. Der zweite Schritt ist der Ausgleich der so ermittelten Unwucht durch Abnehmen oder Hinzufügen von Masse an bestimmten Stellen des auszuwuchtenden Rotors (Wuchtkörpers). Bei "polarem Auswuchten" erfolgt der Ausgleich in jeder Ausgleichsebene an der Stelle, die der beim Meßlauf ermittelten Winkellage der Unwucht entspricht. Es ist dann erforderlich, den Wuchtkörper in die jeweilige Bearbeitungsposition einzudrehen.

In dieser Bearbeitungsposition befindet sich die Stelle des Wuchtkörpers, an der die Masse abgenommen oder hinzugefügt werden soll, in einer bestimmten Position. Dort ist üblicherweise eine Bearbeitungsvorrichtung vorgesehen. Die Eindrehung des Wuchtkörpers in die Bearbeitungsposition kann auf der gleichen Maschine erfolgen, auf welcher die meßtechnische Erfassung der Unwucht erfolgt (Unwuchtmeßmaschine). Die Eindrehung in die Bearbeitungsposition kann aber auch auf einer gesonderten Unwuchtausgleichsmaschine erfolgen, auf welche die gemessenen und gespeicherten Unwuchtdaten übertragen werden. Die "Bearbeitung" in der Bearbeitungsposition kann unmittelbar in einem Ausgleich der Unwucht bestehen. Die Bearbeitung kann aber auch darin bestehen, daß an der Stelle, wo eine Unwucht gemessen wurde, eine Markierung für eine spätere Bearbeitung angebracht wird.

Die Erfindung betrifft ein solches Eindrehen des Wuchtkörpers in eine Bearbeitungsposition.

### Zugrundeliegender Stand der Technik

Die Unwucht eines Wuchtkörpers wird im allgemeinen "dynamisch" mit Hilfe einer Unwuchtmessmaschine für zwei axial gegeneinander versetzte Radialebenen, den "Ausgleichsebenen" gemessen. In jeder Ausgleichsebene ist eine Unwucht bestimmt durch Größe und Winkellage. Kraft- oder Wegschwingungsmesser liefern über eine an sich bekannte elektrische Schaltung bzw. Rechenoperation miteinander verknüpft (elektrischer Rahmen) für jede Ausgleichsebene eine Meßwechselspannung mit der Umlauffrequenz des Wuchtkörpers. Die Amplitude dieser Meßwechselspannung liefert ein Maß für die Größe der Unwucht. Die Phase der Meßwechselspannung hängt von der Winkellage der Unwucht ab. Ein bekanntes Verfahren zur Bestimmung der Winkellage der Unwucht besteht darin, die Meßwechselspannung mit zwei Referenzwechselspannungen in Beziehung zu setzen, welche ebenfalls die Umlauffrequenz des Wuchtkörpers haben, mit dem Umlauf des Wuchtkörpers phasenstarr sind und gegeneinander eine Phasenverschiebung von 90 Grad aufweisen. Dabei kann die Meßwechselspannung in jedem Zeitpunkt mit jeder der Referenzwechselspannungen multipliziert werden. Es kann aber auch von jeder der Referenzwechselspannungen ein phasenempfindlicher Demodulator gesteuert sein und die Meßwechselspannung auf zwei phasenempfindliche Demodulatoren aufgeschaltet werden. Wenn der Wuchtkörper von einem mit dem Wuchtkörper phasenstarr umlaufenden Antriebsmotor, z. B. über eine Kardanwelle, angetrieben wird, können die Referenzwechselspannungen von einem mit diesem Antriebsmotor verbundenen Generator erzeugt werden. Wenn kein solcher mit dem Wuchtkörper phasenstarrer Antriebsmotor vorhanden ist, der Wuchtkörper z. B. über einen Bandantrieb angetrieben wird oder die Unwuchtmessung in Auslauf erfolgt, kann auf dem Wuchtkörper eine Marke aufgebracht werden, die von einer z. B. photoelektrischen Abtastvorrichtung abgetastet wird. Eine solche Marke und Abtastvorrichtung liefert Referenzsignale, aus denen Referenzwechselspannungen oder Referenzrechteckspannungen erzeugt werden können. Es ergeben sich auf diese Weise nach geeigneter Überlagerung der Meßwechselspannung mit den Referenzwechselspannungen (multiplikativ oder durch getastete Gleichrichtung) zwei Meßwerte, üblicherweise in Form von Gleichstromsignalen, die den Komponenten der Unwucht bezogen auf ein wuchtkörperfestes Koordinatensystem entsprechen, welches durch die Winkellage des mit dem Antriebsmotor verbundenen Generators oder durch die Winkellage der Marke auf dem Wuchtkörper bestimmt ist.

Es ist bekannt aus diesen so erhaltenen Komponenten eine unmittelbare Anzeige der Unwucht nach Größe und Winkellage auf einem Bildschirm zu erzeugen.

Bei einer bekannten Anordnung dieser Art ist der Bildschirm eine Mattscheibe mit einem Polarkoordinatensystem. Ein Lichtzeiger wird über zwei Spiegel nach Maßgabe der beiden Komponenten der Unwucht in zwei zueinander senkrechten Richtungen ausgelenkt. Die Winkellage des Lichtpunktes bezogen auf den Ursprung des Polarkoordinatensystems zeigt dann die Winkellage der Unwucht an. Der radiale Abstand des Lichtpunktes von dem Ursprung zeigt die Größe der Unwucht an. Es ist weiterhin bei einer Unwuchtmeßmaschine dieser Art bekannt, diese Lichtpunktanzeige zu speichern, so daß sie auch nach Beendigung des Meßlaufes und Stillsetzung des Antriebes bestehen bleibt. Es wird dann zur Eindrehung des Wuchtkörpers in eine Bearbeitungsstellung auf der gleichen Mattscheibe eine zweite Lichtmarke (Positionsmarke) erzeugt. Diese zweite Lichtmarke gibt die Position des Wuchtkörpers während des Eindrehvorganges an. Wenn der Wuchtkörper so gedreht ist, daß die zweite Lichtmarke mit dem Lichtpunkt der gespeicherten Lichtpunktanzeige zur Deckung gebracht ist, dann steht der Wuchtkörper in seiner Bearbeitungsposition. Dabei wird die zweite Lichtmarke durch eine mit dem Wuchtkörper phasenstarr drehbare Einrichtung erzeugt (Drehfeldsystem).

Es ist weiterhin bekannt, zur Anzeige der Unwucht nach Größe und Richtung eine Kathodenstrahlröhre vorzusehen, wobei die beiden den Komponenten der Unwucht entsprechenden Signale den Kathodenstrahl in zueinander senkrechten Richtungen ablenken.

Durch die EP-B-0 074 416 ist eine Auswuchtmaschine bekannt, bei welcher ein Wuchtkörper durch ein Band angetrieben wird, der Antriebsmotor also nicht phasenstarr mit dem Wuchtkörper umläuft. mit dem Antriebsmotor ist ein Impulsgeber verbunden. Eine an dem Wuchtkörper angebrachte Marke wird durch eine Abtastvorrichtung abgetastet und liefert nach jeder Umdrehung des Wuchtkörpers einen Referenzimpuls, Ein Zähler zählt die Impulse des Impulsgebers von einem Referenzimpuls zum nächsten. Auf diese Weise wird die einer vollen Umdrehung des Wuchtkörpers entsprechende Anzahl von Impulsen bestimmt. Durch Multiplikation dieser Zahl mit dem Verhältnis des gemessenen Unwuchtwinkels zu 360 Grad wird eine dem Unwuchtwinkel entsprechende Impulszahl gewonnen. Nach dieser Impulszahl erfolgt die Einstellung des Wuchtkörpers in die Bearbeitungsstellung.

Durch die EP-B 0 085 873 ist weiterhin eine Auswuchtmaschine bekannt, bei welcher mit einer Tragrolle der Auswuchtmaschine ein Impulsgeber verbunden ist. An dem Wuchtkörper ist eine Marke angebracht. Diese Marke wird durch eine Abtasteinrichtung abgetastet und erzeugt so einen Referenzimpuls. Aus der Meßwechselspannung wird ein Meßimpuls erzeugt, dessen Phase relativ zu dem Referenzimpuls die Winkellage der Unwucht relativ zu der Marke darstellt. Die Impulse des Impulsgebers werden während des Meßlaufes von dem Referenzimpuls bis zu dem Meßimpuls gezählt. Die so erhaltene Zahl wird gespeichert. Nach dieser Zahl erfolgt mit Hilfe des Impulsgebers die Eindrehung des Wuchtkörpers.

### Offenbarung der Erfindung

Der Erfindung liegt die Aufgabe zugrunde, eine Vorrichtung der eingangs definierten Art so auszubilden, daß sie auch bei Auswuchtmaschinen einsetzbar ist, die keine mit dem Wuchtkörper phasenstarr umlaufende Maschinenteile aufweisen, bei denen also beispielsweise der Wuchtkörper über ein Band angetrieben wird. Erfindungsgemäß wird diese Aufgabe durch eine Vorrichtung gemäß Anspruch 1 gelöst.

Die signalerzeugenden Mittel sind zwar mit einem mit dem Wuchtkörper umlaufenden Teil, z.B. dem Antriebsmotor des Bandes oder einer Tragrolle, gekoppelt aber laufen nicht notwendig phasenstarr mit dem Wuchtkörper um. Aus den eine Richtungsdiskriminierung zulassenden Signalen des Impulsgebers oder Decoders und dem Referenzsignal lässt sich im Rechner ein Positionssignal für die jeweilige Position des Wuchtkörpers gewinnen. Zu diesem Zweck kann die Anzahl der bei einer vollen Umdrehung von Referenzsignal zu Referenzsignal erzeugten Winkelinkrementsignale des Impulsgebers oder Decoders ausgebildeten als Umgangs-Signalzahl gezählt werden. Die dann jeweils von einem Referenzsignal aus gezählten Impulse (Positions-Signalzahl) dividiert durch die Umfangs-Signalzahl liefert dann ein von der Art des Wuchtkörpers unabhängiges Positionssignal. Dieses Positionssignal steuert dann Mittel zur Erzeugung der Positionsanzeigenden Sichtmarke.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert

### Kurze Beschreibung der Zeichnungen

- Fig. 1: zeigt schematisch eine Auswuchtmaschine mit einer Vorrichtung zum Eindrehen des Wuchtkörpers in eine Bearbeitungsstellung.
- Fig. 2: zeigt den Bildschirm bei einer abgewandelten Ausführung.

### Bevorzugte Ausführung der Erfindung

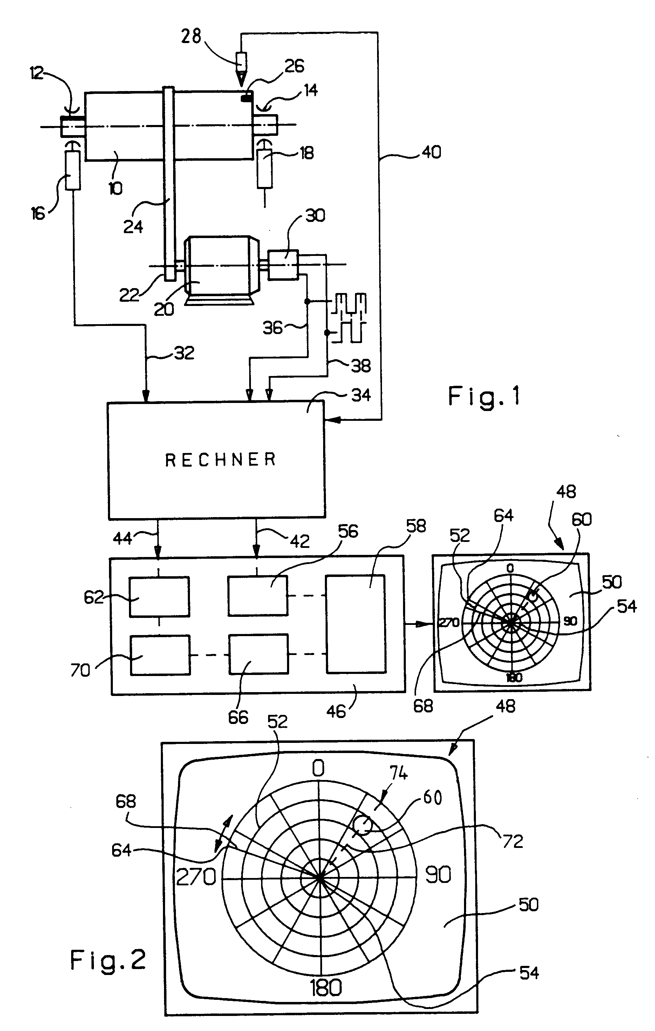

In Fig. 1 ist ein Wuchtkörper 10 in Lagern 12 und 14 gelagert. Die Lager 12 und 14 sind in bekannter Weise auf je einer (nicht dargestellten) Schwingbrücke angeordnet, die an kraftmessenden Gebern 16 und 18 abgestützt ist. Die Geber 16 und 18 liefern Meßwechselspannungen, welche die durch eine Unwucht hervorgerufenen Lagerkräfte wiedergeben. Die Unwuchten werden üblicherweise bezogen auf zwei Ausgleichsebenen bestimmt, die von den Lagerebenen verschieden sind. Als weiterverarbeitete Meßwechselspannung dienen daher Linearkombinationen der in den Lagerebenen von den Gebern 16 und 18 erhaltenen Meßwechselspannungen. Das ist an sich bekannt und daher zur Vereinfachung hier nicht dargestellt. Es wird nur eine Meßwechselspannung betrachtet, die vom Geber 16 geliefert wird. Der Wuchtkörper 10 wird von einem Antriebsmotor 20 über eine Bandrolle 22 und ein Band 24 angetrieben. Es ist einleuchtend, daß der Antriebsmotor 20 nicht phasenstarr mit dem Wuchtkörper 10 umläuft. Das Drehzahlverhältnis hängt ab vom Verhältnis der Durchmesser der Bandrolle 22 und des Wuchtkörpers 10 im Bereich des Bandes 24.

Auf dem Wuchtkörper 10 ist eine Marke 26 angebracht. Die Marke 26 wird von einer Abtasteinrichtung 28 angetastet. Die Abtasteinrichtung 28 liefert bei Erfassen der Marke 26 ein Referenzsignal.

Mit dem Antriebsmotor 20 ist ein Impulsgeber oder Decoder 30 gekoppelt. Der Impulsgeber 30 liefert zwei um eine Viertelperiode gegeneinander phasenverschobene Rechtecksignalfolgen.

Die Meßwechselspannung von dem Geber 16 ist über eine Leitung 32 auf einen ersten Rechner 34 geschaltet. Die beiden gegeneinander phasenverschobenen Rechtecksignalfolgen von dem Impulsgeber 30 sind über Leitung 36 und 38 auf den Rechner 34 geschaltet. Schließlich erhält der Rechner 34 noch das Referenzsignal von der Abtasteinrichtung 28 über eine Leitung 40.

Der Rechner 34 bildet aus dem Referenzsignal von der Abtasteinrichtung 28 und der Meßwechselspannung vom Geber 16 Ausgangssignale an einem Ausgang 42, welche den Komponenten der Unwucht (in der Ebene des Lagers 12) entsprechen. Das ist an sich bekannt und daher hier nicht im einzelnen beschrieben.

Der Rechner 34 erzeugt weiterhin aus dem Referenzsignal von der Abtasteinrichtung 28 und den Rechtecksignalfolgen von dem Impulsgeber 30 ein Positionssignal an einem Ausgang 44. Dieses Positionssignal gibt beim Eindrehvorgang die Position des Wuchtkörpers 10 an.

Zu diesem Zweck kann der Rechner 34 wie folgt arbeiten:
Während des Meßlaufes wird die Zahl der Signale, die an einem Eingang des Impulsgebers 30 auftraten, von einem Referenzsignal der Abtasteinrichtung 28 bis zum nächsten Referenzsignal gezählt. Das ist die "Umfangs-Signalzahl", d.h. die Signalzahl, die einer vollen Umdrehung des Wuchtkörpers 10, also einem Drehwinkel des Wuchtkörpers 10 von 360 Grad entspricht. Diese "Umfangs-Signalzahl" wird gespeichert. Nach Beendigung des Meßlaufes werden die beim Eindrehen des Wuchtkörpers 10 in die Bearbeitungsposition auftretenden Rechtecksignale vom Impulsgeber 30 richtungsabhängig gezählt. Durch die beiden um eine Viertelperiode gegeneinander phasenverschobenen Rechtecksignalfolgen ist eine solche richtungsabhängige Zählung möglich. Der Zähler wird jedesmal zurückgestellt, wenn das Referenzsignal erscheint. Das Verhältnis des so erhaltenen Zählerstandes, der eine "Positions-Signalzahl" darstellt, zu der "Umfangs-Signalzahl" ist daher unabhängig vom Umfang des Wuchtkörpers 10 in Bereich des Bandes 24 ein Maß für den Drehwinkel des Wuchtkörpers 10. Das Verhältnis "1" entspricht einer Drehung von 360 Grad. Multipliziert man das Verhältnis mit 360 Grad, so erhält man unmittelbar den Drehwinkel des Wuchtkörpers 10 aus seiner durch die Marke 26 und die Abgriffeinrichtung 28 bestimmten Nullstellung. Das Verhältnis von Position-Signalzahl zu Umfangs-Signalzahl ggf. berichtigt um einen Winkel zwischen Abgriffeinrichtung 28 und Bearbeitungseinrichtung kann daher als Positions-Signal an dem Ausgang 44 ausgegeben werden.

Die Komponenten der Unwucht vom Ausgang 42 des Rechners 34 sind auf einen Rechner 46 geschaltet. Der Rechner 46 ist einer Kathodenstrahlröhre 48 mit einem Bildschirm 50 zugeordnet.

Der Rechner 46 steuert die Kathodenstrahlröhre 48 so an, daß auf dem Bildschirm 50 ein Polarkoordinatensystem 52 mit einem Ursprung 54 erscheint.

Die Komponenten der Unwucht am Ausgang 42 erfahren im Rechner 46 durch Hardware und Software eine Aufbereitung für die Meßwertdarstellung auf dem Bildschirm 50. Das ist in Fig. 1 durch Block 56 dargestellt. Die so erhaltenen Signale sind auf eine Steuerung 58 für die Bildschirmdarstellung geschaltet. Es wird dadurch eine Sichtmarke 60 in Form eines Leuchtpunktes erzeugt. Der Abstand der Sichtmarke 60 vom Ursprung entspricht der Größe der Unwucht. der Winkel zwischen der durch "0" gehenden vertikalen Linie und einem durch die Sichtmarke 60 gehenden Radius entspricht der Winkellage der Unwucht bezogen auf die Marke 26.

Das Positionssignal am Ausgang 44 ist ebenfalls auf den Rechner 46 geleitet.

Durch eine Softwareverarbeitung, die durch Block 62 dargestellt ist, werden Koordinaten eines - nicht bildlich dargestellten - Punktes 64 auf dem äußersten Kreis des Polarkoordinatensystems 52 berechnet, die der Position des Wuchtkörpers 10 entsprechen, Zwischen dem Ursprung 54 und dem so berechneten Punkt 64 wird durch eine Softwareverarbeitung, die durch Block 66 dargestellt ist, auf dem Bildschirm 50 eine Linie erzeugt. Das ist eine zweite Sichtmarke in Form eines Zeigers 68. Wenn sich der Wuchtkörper 10 um ein durch die Signalfolgen des Impulsgebers 30 bestimmtes Winkelinkrement weitergedreht hat, wird durch die Softwareverarbeitung gemäß Block 62 ein neuer Punkt 64 berechnet. Dann wird, was durch einen Block 70 dargestellt ist, der bisher dargestellte Positionszeiger 68 gelöscht und ein neuer, durch den neuen Punkt 64 gehender Zeiger dargestellt.

Die Darstellung des so fortgeschalteten Zeigers 68 erfolgt in sehr enggestuften Winkelschritten, so daß der Zeiger 68 bei einer Drehung des Wuchtkörpers 10 quasi - kontinuierlich umläuft. Bei dem Umlauf des Wuchtkörpers 10 läuft der berechnete Punkt 64 um den Ursprung herum auf dem äußersten Kreis des Polarkoordinatensystems 52 um. Der Positionszeiger 68 dreht sich phasenstarr mit dem Wuchtkörper 10.

Der Wuchtkörper 10 wird nun solange verdreht, bis der Positionszeiger 68 durch das Zentrum der Sichtmarke 60 hindurchgeht. Dann ist der Wuchtkörper 10 in der richtigen Bearbeitungsposition.

Der Positionszeiger 68 wird gelöscht, sobald ein neuer Meßlauf der Auswuchtmaschine gestartet wird. Der Positionszeiger 68 wird auch gelöscht, sobald eine Rechnertaste für ein anderes Arbeitsprogramm des Rechners 46 betätigt wird, bei welchem die Zeigerdarstellung nicht erforderlich ist.

Bei der beschriebenen Vorrichtung ergibt sich, ähnlich wie bei den zum Stand der Technik erwähnten, mit einem Lichtzeiger arbeitenden Vorrichtungen, das Problem, daß die Positioniergenauigkeit abnimmt, wenn die Größe der Unwucht mit fortschreitender Auswuchtgüte abnimmt. Die Sichtmarke 60 nähert sich dann dem Ursprung 54. Diese Probleme können durch folgende Maßnahmen gelöst werden:
Bei der Verarbeitung der Unwucht-Meßdaten vom Ausgang 44 des Rechners 34 in dem Rechner 46 kann die Winkellage der Unwucht relativ zu der Marke 26 auch bei kleinen Unwuchten mit hoher Genauigkeit berechnet werden. Dabei ist es möglich, während des Meßlaufes eine Vielzahl von Einzelmessungen durchzuführen und im Rechner 34 zu speichern. Aus diesem Einzelmessungen können Mittelwerte gebildet werden. Es ergeben sich dadurch sehr genaue Werte für die Komponenten der Unwucht. Aus diesen Komponenten kann die Winkellage entsprechend genau berechnet werden.

Liegt auf diese Weise die Winkellage der Unwucht fest, so kann ausgehend vom Ursprung 54 durch den so rechnerisch bestimmten, die Unwucht darstellenden Punkt 60 ein zweiter Zeiger 72 auf dem Bildschirm 50 der Kathodenstrahlröhre 48 sichtbar gemacht werden. Das ist in Fig. 2 dargestellt. Der Zeiger 72 kann sich unabhängig von der Größe der Unwucht bis zu dem äußersten Kreis des polarkoordinatensystems 52 erstrecken. Es ist auch möglich, wie in Fig. 2 ebenfalls dargestellt ist, auf dem äußersten Kreis des Polarkoordinatensystems eine die Winkellage der Unwucht angebende Markierung, z. B. eine Pfeilmarke 74 zu erzeugen. Diese Pfeilmarke 74 kennzeichnet dann die Winkellage der Unwucht mit großer Genauigkeit. Die Sichtmarke 60 welche Größe und Winkellage der Unwucht auf dem Polarkoordinatensystem anzeigt, wird auf dem Bildschirm 50 zusätzlich erzeugt. Diese Sichtmarke 60 dient der Größenanzeige und der anschaulichen Darstellung der Unwucht. Die Sichtmarke 60 hat aber nicht mehr die Funktion, daß danach der Wuchtkörper 10 in seine Bearbeitungsposition eingedreht wird. Vielmehr wird zur genauen Eindrehung des Wuchtkörpers 10 in seine Bearbeitungsposition der Wuchtkörper 10 und der mit ihm phasenstarr umlaufende Positionszeiger 68 so lange gedreht, bis dieser Positionszeiger 68 mit dem die Winkellage der Unwucht angebenden Zeiger 72 (oder der Pfeilmarke 74) zusammenfällt. Wenn das der Fall ist, steht der Wuchtkörper 10 in der Bearbeitungsposition.

Bei der in Fig. 2 dargestellten, bevorzugten Ausführung ist die Kathodenstrahlröhre 48 eine Farbbildröhre mit einem Farbbildschirm 50. Die beiden Zeiger 68 und 72 werden in unterschiedlichen Farben erzeugt. Wenn die beiden Zeiger 68 und 72 zur Deckung kommen. ergibt sich eine deutlich erkennbare Mischfarbe. Auf diese Weise läßt sich eine hohe Eindrehgenauigkeit erzielen.

Die Anzeige der Unwucht und die Eindrehung des Wuchtkörpers 10 für die zweite Ausgleichsebene erfolgt in gleicher Weise.

Statt durch den Impulsgeber 30 können die richtungsabhängigen Signalfolgen auch auf folgende Weise erzeugt werden: Zum Antrieb des Wuchtkörpers 10 dient als Antriebsmotor 20 ein Schrittmotor. Die signalerzeugenden Mittel enthalten eine Schaltung, die von den Antriebsimpulsen des Schrittmotors beaufschlagt ist. Diese Schaltung liefert Signalfolgen, welche eine Richtungsdiskriminierung gestatten.

Eine andere mögliche Abwandlung besteht darin, daß das Band 24 über eine das Band umlenkende Rolle geführt ist. Der Impulsgeber 30 ist dann mit dieser Rolle verbunden.

## Patentansprüche

1. Vorrichtung zur Messung und Anzeige der Lage einer Unwucht eines Wuchtkörpers (10) und zum Eindrehen des Wuchtkörpers (10) in eine Bearbeitungsposition, enthaltend
(a) eine Unwucht-Anzeigeeinrichtung zur speicherbaren Anzeige einer Unwucht-Winkellage, die bei einem Meßlauf relativ zu einem mit dem Wuchtkörperumlauf phasenstarren Referenzsignal gemessen wird, als erste Sichtmarke (60) auf einem Bildschirm (50) und
(b) eine Positions-Anzeigeeinrichtung, durch welche während des Eindrehvorganges die Position eines Wuchtkörpers (10) auf dem gleichen Bildschirm (50) zusammen mit der Anzeige der Unwucht-Winkellage als zweite Sichtmarke (68) anzeigbar ist,
**dadurch gekennzeichnet, daß** die Positions-Anzeigeeinrichtung enthält:
(c) einen Impulsgeber (30),
- der mit einem mit dem Wuchtkörper (10) umlaufenden Teil (20) gekoppelt ist und
- Signalfolgen liefert, aus denen Richtung und Betrag von Bewegungen dieses Teils (20) ableitbar sind,
(d) Zähl- und Speichermittel,
- durch welche während des Meßlaufes die zwischen aufeinanderfolgenden Referenzsignalen von dem Impulsgeber gelieferten Signale gezählt werden und deren Zahl als "Umfangs-Signalzahl" gespeichert wird, und
- während des Eindrehvorganges ausgehend von dem Referenzsignal die Zahl der von dem Impulsgeber gelieferten Signale als "Positions-Signalzahl" bestimmt wird,
(e) Rechnermittel (46) zur Berechnung der Position des Wuchtkörpers (10) relativ zu einer Bearbeitungseinrichtung aus dem Verhältnis von Positions-Signalzahl und Umfangs-Signalzahl, und
(f) von den Rechnermitteln (46) gesteuerte Mittel (62) zur Erzeugung der die Position des Wuchtkörpers (10) auf dem Bildschirm wiedergebenden zweiten Sichtmarke (68).

2. Vorrichtung nach Anspruch 1, **dadurch gekennzeichnet, dass** durch die Unwuchtlage-Anzeigeeinrichtung gleichzeitig eine Anzeige des Betrages der Unwucht durch eine radiale Dimension der Sichtmarke (60) in bezug auf einen Ursprung (54) erzeugbar ist.

3. Vorrichtung nach Anspruch 1 oder 2, **dadurch gekennzeichnet, dass** der Wuchtkörper (10) durch Antriebsmittel (22) antreibbar ist, die keine mit dem Wuchtkörper (10) phasenstarr umlaufenden Teile enthalten.

4. Vorrichtung nach Anspruch 3, **dadurch gekennzeichnet, dass** die Antriebsmittel von einem an dem Wuchtkörper (10) anliegenden, durch einen Antriebsmotor (20) angetriebenen Band (24) gebildet sind.

5. Vorrichtung nach Anspruch 3 oder 4, **dadurch gekennzeichnet, dass** der Impulsgeber mit einer den Wuchtkörper (10) tragenden Lagerrolle verbunden ist.

6. Vorrichtung nach Anspruch 4, **dadurch gekennzeichnet, dass** der Impulsgeber (30) mit dem Antriebsmotor (20) für das Band (22) verbunden sind.

7. Vorrichtung nach Anspruch 4, **dadurch gekennzeichnet, dass** der Impulsgeber (30) mit einer das Band (22) umlenkenden Rolle verbunden ist.

8. Vorrichtung nach einem der Ansprüche 1 bis 7, **dadurch gekennzeichnet, dass** zur Erzeugung des mit dem Wuchtkörperumlauf phasenstarren Referenzsignals eine Abtastvorrichtung (28) zur Abtastung einer an dem Wuchtkörper (10) vorhandenen Marke (26) vorgesehen ist.

9. Vorrichtung nach einem der Ansprüche 1 bis 8, **dadurch gekennzeichnet, dass** der Bildschirm (50) von einem zweidimensionalen elektronischen Anzeigeglied (48) gebildet ist.

10. Vorrichtung nach Anspruch 9, **dadurch gekennzeichnet, dass** das elektronische Anzeigeglied eine Kathodenstrahlröhre (48) ist.

11. Vorrichtung nach Anspruch 2 und Anspruch 9 oder 10, **dadurch gekennzeichnet, dass** auf dem elektronischen Anzeigeglied (48) zusätzlich ein Polarkoordinatensystem (52) mit einer radialen Skala für die Grössenanzeige und einer Winkelskala für die Anzeige der Lage der Unwucht erzeugbar ist.

12. Vorrichtung nach einem der Ansprüche 1 bis 11, **dadurch gekennzeichnet, dass** die Mittel zur Erzeugung der positionsanzeigenden Sichtmarke (68) Mittel zur Erzeugung eines radialen Positionszeigers auf dem Bildschirm (50) enthalten, wobei der radiale Positionszeiger die Position des Wuchtkörpers (10) bei dem Eindrehvorgang darstellt und die Unwucht sich in der Bearbeitungsposition befindet, wenn der radiale Positionszeiger mit der die Winkellage der Unwucht darstellenden Sichtmarke (60) auf dem Bildschirm (50) zur Deckung kommt.

13. Vorrichtung nach Anspruch 12, **dadurch gekennzeichnet, dass** die Unwuchtlage-Anzeigeeinrichtung Mittel zur Erzeugung der Sichtmarke (72) in Form eines radialen Zeigers aufweist, dessen Winkellage der Winkellage der Unwucht entspricht.

14. Vorrichtung nach Anspruch 10 und 13, **dadurch gekennzeichnet, dass**
(a) die Kathodenstrahlröhre (48) eine Farbröhre ist und
(b) der die Winkellage der Unwucht darstellende Zeiger (72) und der die Position des Wuchtkörpers (10) darstellende Positionszeiger (68) auf dem Bildschirm (50) der Farbbildröhre in unterschiedlichen Farben dargestellt werden, so dass sich bei Deckung der beiden Zeiger (68, 72) eine Mischfarbe ergibt.

15. Vorrichtung nach einem der Ansprüche 1 bis 14, **dadurch gekennzeichnet, dass** durch den mit dem Teil (20) umlaufenden Impulsgeber (30) zwei gegeneinander phasenverschobene, eine Richtungsdiskriminierung gestattende Signalfolgen erzeugbar sind.

16. Vorrichtung nach Anspruch 15, **dadurch gekennzeichnet, dass** ein Rechner (34) enthält:
(a) Mittel zur richtungsabhängigen Zählung der Signale des Impulsgebers während einer durch das Referenzsignal bestimmten Umdrehung des Wuchtkörpers und zur Speicherung der so erhaltenen Umfangs-Signalzahl
(b) Mittel zur richtungsabhängigen Zählung der Signale des Impulsgebers jeweils ausgehend von einer durch das Referenzsignal bestimmten Referenzposition zur Bildung einer Positions-Signalzahl, und
(c) Mittel zur Bildung eines dem Verhältnis von Positions-Signalzahl und Umfangs-Signalzahl proportionalen Wertes als das die Position des Wuchtkörpers wiedergebende Positionssignal.

17. Vorrichtung nach den Ansprüchen 12 und 16, **dadurch gekennzeichnet, dass** die Mittel zur Erzeugung eines radialen, die Position des Wuchtkörpers phasenstarr anzeigenden Positionszeigers enthalten:
(a) Rechnermittel (62), auf welchen das sich bei der Drehung des Wuchtkörpers (10) stufenweise ändernde Positionssignal aufgeschaltet ist, zur Berechnung der Koordinaten eines Punktes (64), der auf einem Kreis um den Ursprung (54) des Bildschirms (50) liegt und die Position des Wuchtkörpers (10) wiedergibt,
(b) Mittel (66) zur Erzeugung eines durch den Ursprung (54) und den berechneten Punkt (64) gehenden Positionszeigers (68) auf dem Bildschirm (50), und
(c) Mittel (70) zum Löschen der bestehenden Zeigerdarstellung bei jeder stufenweisen Änderung des Positionssignals.

18. Vorrichtung nach Anspruch 17, **gekennzeichnet durch** Mittel zum Löschen der bestehenden Zeigerdarstellung beim Einschalten eines Messlaufes.

19. Vorrichtung nach einem der Ansprüche 1 bis 14, **dadurch gekennzeichnet, dass**
(a) der Wuchtkörper durch einen Schrittmotor als Antriebsmotor antreibbar ist und
(b) der Impulsgeber von einer Schaltung gebildet ist, durch welche aus den Antriebsimpulsen des Schrittmotors Signalfolgen ableitbar sind, welche eine Richtungsdiskriminierung gestatten.

## Claims

1. Apparatus for measuring and indicating the position of an unbalance at a body (10) to be balanced and for rotating the body (10) to be balanced into a processing position, said apparatus containing
(a) an unbalance indicating device for storably indicating an angular position of the unbalance as a first visible mark (60) on a screen (50), said unbalance angular position being measured, during a measuring run, relative to a reference signal which is phase locked to the rotation of the body to be balanced, and
(b) a position indicating device by means of which the position of a body (10) to be balanced is adapted to be indicated as a second visible mark (68) on the same screen (50) conjointly with the indication of the unbalance angular position during the process of rotation into the processing position,
**characterised in that** the position indicating device includes:
(c) a pulse transmitter (30),
- which is coupled to a member (20) rotating conjointly with the body (10) to be balanced and
- which supplies signal sequences from which the direction and the amount of movements of said member (20) are enabled to be derived,
(d) counting and storing means,
- by means of which the signals are counted which are supplied by the pulse transmitter between successive reference signals during the measuring run, the number of said signals being stored as a "circumference signal number", and
- the signal number, which is supplied by the pulse transmitter starting from the reference position during the process of rotation into the processing position, is determined as a "position signal number",
(e) computer means (46) for computing, from the ratio of the position signal number and the circumference signal number, the position of the body (10) to be balanced relative to a working device, and
(f) means (62) controlled by the computer means (46), for generating the second visible mark (68) which represents the position of the body (10) to be balanced on the screen.

2. Apparatus according to claim 1, **characterised in that** the unbalance position-indicating device simultaneously is enabled to generate an indication of the amount of the unbalance by means of a radial dimension of the visible mark (60) relative to an origin (54).

3. Apparatus according to claim 1 or 2, **characterised in that** the body (10) to be balanced is adapted to be driven by drive means (22) which is free of members rotating in a phase-locked manner conjointly with the body (10) to be balanced.

4. Apparatus according to claim 3, **characterised in that** the drive means is formed by a belt (24) which engages the body (10) to be balanced and which is driven by means of a drive motor (20).

5. Apparatus according to claim 3 or 4, **characterised in that** the pulse transmitter is connected to a supporting roll supporting the body (10) to be balanced.

6. Apparatus according to claim 4, **characterised in that** the pulse transmitter (30) is connected to the drive motor (20) for the belt (22).

7. Apparatus according to claim 4, **characterised in that** the pulse transmitter (30) is connected to a roll deflecting the belt (22).

8. Apparatus according to any one of claims 1 to 7, **characterised in that** a pick-up device (28) is provided for picking up a mark (26) present at the body (10) to be balanced and for generating the reference signal which is phase-locked to the roation of the body to be balanced.

9. Apparatus according to any one of claims 1 to 8, **characterised in that** the screen (50) is formed by a two-dimensional electronic indicating component (48).

10. Apparatus according to claim 9, **characterised in that** the electronic indicating component is a cathode ray tube (48).

11. Apparatus according to claim 2 and claim 9 or 10, **characterised in that** the electronic indicating component (48) is adapted to additionally generate a polar coordinate system (52) having a radial scale for indicating the magnitude of the unbalance and an angular scale for indicating the position of the unbalance.

12. Apparatus according to any one of claims 1 to 11, **characterised in that** the means for generating the position indicating visible mark (68) include means for generating a radial position pointer on the screen (50), whereby the radial position pointer displays the position of the body (10) to be balanced during the process of rotation into the processing position, the unbalance being located in said processing position once the radial position pointer coincides on the screen (50) with said visible mark (60) which displays the angular position of said unbalance.

13. Apparatus according to claim 12, **characterised in that** the unbalance position-indicating device comprises means for generating the visible mark (72) in the form of a radial pointer having an angular position which corresponds to the angular position of the unbalance.

14. Apparatus according to claim 10 and 13, **characterised in that**
(a) the cathode ray tube (48) is a colour tube and
(b) the pointer (72) displaying the angular position of the unbalance and the position pointer (68) displaying the position of the body (10) to be balanced, are shown on the screen (50) of the colour picture tube in different colours so that a secondary colour results upon coincidence of the two pointers (68,72).

15. Apparatus according to any one of claims 1 to 14, **characterised in that** the pulse transmitter (30) which rotates conjointly with the member (20), is adapted to produce two signal sequences which are phase shifted relative to each other and which enable directional discrimination.

16. Apparatus according to claim 15, **characterised in that** a computer (34) includes:
(a) means for directional counting of the pulse transmitter signals during a rotation of the body to be balanced as determined by the reference signal and for storing the thus obtained circumference signal number
(b) means for directional counting of the pulse transmitter signals, starting each time from a reference position as defined by the reference signal, for forming the position signal number, and
(c) means for forming a value proportional to the ratio of the position signal number and the circumference signal number, said value constituting the position signal representing the position of the body to be balanced.

17. Apparatus according to claim 12 and 16, **characterised in that** the means for generating a radial position pointer which indicates the position of the body to be balanced in a phase-locked manner, includes:
(a) computer means (62) to which the position signal is applied which position signal changes in a stepwise manner during rotation of the body (10) to be balanced, for computing the coordinates of a point (64) located on a circle around the origin (54) of the screen (50) and representing the position of the body (10) to be balanced,
(b) means (66) for generating on the screen (50) a position pointer (68) which extends through the origin (54) and the computed point (64), and
(c) Means (70) for erasing the existing pointer display at each stepwise change of the position signal.

18. Apparatus according to claim 17, **characterised by** means for erasing the existing pointer display upon activation of a measuring run.

19. Apparatus according to any one of claims 1 to 14, **characterised in that**
(a) the body to be balanced is adapted to be driven by means of a stepping motor forming the drive motor and
(b) the pulse transmitter is formed by circuit means which are adapted to derive from the drive pulses of the stepping motor, signal sequences, which enable directional discrimination.

## Revendications

1. Dispositif destiné à la mesure et à l'indication de la position d'un balourd d'un corps d'équilibrage (10), et à tourner le corps d'équilibrage (10) dans une position de traitement, comprenant
(a) un dispositif d'indication de balourd destiné à l'indication d'une position angulaire de balourd comme premier repère visuel (60) sur un écran (50), indication qui est susceptible d'être mise en mémoire, la position angulaire étant mesurée, lors d'un cycle de mesure, par rapport à un signal de référence rigide en phase avec la rotation du corps d'équilibrage, et
(b) un dispositif d'indication de position susceptible d'indiquer, lors du processus de rotation, la position d'un corps d'équilibrage (10) comme second repère visuel (68) sur le même écran (50) conjointement avec l'indication de la position angulaire de balourd,
**caractérisé par le fait que** le dispositif d'indication de position comprend:
(c) un capteur d'impulsion (30),
- qui est accouplé à un élément (20) tournant avec le corps de balourd (10), et
- qui fournit des séquences de signal à partir desquelles on peut dériver la direction et le montant de mouvements de cet élément (20),
(d) des moyens de compteur et de mémoire,
- qui comptent, lors du cycle de mesure, les signaux fournis entre des signaux de référence succéssifs par le capteur d'impulsion, et dont le nombre est mémorisé comme "nombre de signal de circonférence", et
- qui déterminent, lors du processus de rotation, le nombre de signaux fournis par le capteur d'impulsion comme "nombre de signal de position", en partant du signal de référence,
(e) des moyens calculateurs (46) destinés à calculer la position du corps d'équilibrage (10) par rapport à un dispositif de traitement à partir du rapport entre le nombre de signal de position et le nombre de signal de cironférence, et
(f) des moyens (62) commandés par les moyens calculateurs (46) destinés à engendrer le second repère visuel (68) représentant la position du corps d'équilibrage (10) sur l'écran.

2. Dispositif selon la revendication 1, **caractérisé par le fait que** le dispositif d'indication de la position de balourd peut simultanément engendrer une indication du montant du balourd par une dimension radiale du repère visuel (60) par rapport à une origine (54).

3. Dispositif selon la revendication 1 ou 2, **caractérisé par le fait que** le corps de balourd (10) est susceptible d'être entraîné par des moyens d'entraînement (22) qui ne comprennent pas d'éléments tournant rigidement en phase avec le corps d'équilibrage (10).

4. Dispositif selon la revendication 3, **caractérisé par le fait que** les moyens d'entraînement sont formés par une bande (24) entraînée par un moteur de commande (20) et en contact avec le corps d'équilibrage (10).

5. Dispositif selon la revendication 3 ou 4, **caractérisé par le fait que** le capteur d'impulsion est relié à une poulie de palier portant le corps d'équilibrage (10).

6. Dispositif selon la revendication 4, **caractérisé par le fait que** le capteur d'impulsion (30) est relié au moteur de commande (20) pour la bande (22).

7. Dispositif selon la revendication 4, **caratérisé par le fait que** le capteur d'impulsion (30) est relié à une poulie renversant la bande (22).

8. Dispositif selon l'une des revendications 1 à 7, **caractérisé par le fait que** l'on a prévu un dispositif d'exploration (28) destiné à explorer un repère (26) prévu sur le corps d'équilibrage (10) afin d'engendrer le signal de référence rigide en phase avec la rotation du corps d'équilibrage.

9. Dispositif selon l'une des revendications 1 à 8, **caractérisé par le fait que** l'écran (50) est formé par un membre indicateur (48) électronique à deux dimensions.

10. Dispositif selon la revendication 9, **caractérisé par le fait que** le membre indicateur électronique est un tube à rayons cathodiques (48).

11. Dispositif selon la revendication 2 et la revendication 9 ou 10, **caractérisé par le fait que** sur le membre indicateur électronique (48), l'on peut engendrer, en plus, un système des coordonnées polaires (52) muni d'une échelle radiale pour l'indication de la grandeur et d'une échelle angulaire pour l'indication de la position du balourd.

12. Dispositif selon l'une des revendications 1 à 11, caractérisé par le fait que les moyens destinés à engendrer le repère visuel (68) indiquant la position comprennent des moyens destinés à engendrer un indicateur de position radiale sur l'écran (50), l'indicateur de position radiale illustrant la position du corps d'équilibrage (10) lors du processus de rotation et le balour se trouvant dans la position de traitement, lorsque l'indicateur de position radiale se pose sur le repère visuel (60) indiquant la position angulaire du balourd sur l'écran (50).

13. Dispositif selon la revendication 12, **caractérisé par le fait que** le dispositif d'indication de la position de balourd comprend des moyens destinés à engendrer le repère (72) en forme d'un indicateur radial dont la position angulaire correspond à la position angulaire du balourd.

14. Dispositif selon la revendication 10 et 13, **caractérisé par le fait que**
(a) le tube à rayons cathodiques (48) est un tube de couleur , et
(b) l'indicateur (72) montrant la position angulaire du balourd et l'indicateur de position (68) montrant la position du corps d'équilibrage (10) sont illustrés sur l'écran (50) du tube de couleur en couleurs différentes de sorte que dans le cas de superposition des deux indicateurs (68, 72), il en résulte une couleur mélangée.

15. Dispositif selon l'une des revendications 1 à 14, **caractérisé par le fait que** le capteur d'impulsion (30) tournant avec l'élément (20) peut engendrer deux séquences de signal en phase opposé, permettant une discrimination de direction.

16. Dispositif selon la revendication 15, **caractérisé par le fait qu**'un calculateur (34) comprend:
(a) des moyens destinés à compter les signaux du capteur d'impulsion indépendemment de la direction lors d'une rotation du corps d'équilibrage déterminée par le signal de référence, et destinés à mémoriser le nombre de signal de circonférence ainsi obtenu,
(b) des moyens destinés à compter les signaux du capteur d'impulsion indépendemment de la direction, en partant respectivement d'une position de référence déterminée par le signal de référence afin de former un nombre de signal de position, et
(c) des moyens destinés à former une valeur proportionnelle au rapport entre le nombre de signal de position et le nombre de signal de circonférence, comme signal de position représentant la position du corps d'équilibrage.

17. Dispositif selon les revendications 12 et 16, **caractérisé par le fait que** les moyens destinés à engendrer un indicateur de position radiale indiquant la position du corps d'équilibrage rigidement en phase, comprennent:
(a) des moyens calculateurs (62) auxquels le signal de position est appliqué, signal qui lors de la rotation du corps d'équilibrage (10) se modifie par degrés, afin de calculer les coordonnées d'un point (64) situé sur un cercle autour de l'origine (54) de l'écran (50) et représentant la position du corps d'équilibrage (10),
(b) des moyens (66) destinés à engendrer un indicateur de position (68) passant par l'origine (54) et le point calculé (64) sur l'écran (50), et
(c) des moyens (70) destinés à effacer la représentation actuelle de l'indicateur lors de chaque modification par degrés du signal de position.

18. Dispositif selon la revendication 17, **caractérisé par** des moyens destinés à effacer la représentation actuelle de l'indicateur lors de la mise en circuit d'un cycle de mesure.

19. Dispositif selon l'une des revendications 1 à 14, **caractérisé par le fait que**
(a) le corps d'équilibrage est susceptible d'être entraîné par un moteur pas à pas comme moteur de commande, et
(b) le capteur d'impulsion est formé par un circuit par lequel on peut dériver des séquences de signal à partir des impulsions d'entraînement du moteur pas à pas, séquences de signal qui permettent une discrimination de direction.
